# EUROPEAN PATENT SPECIFICATION

(11) **EP 0 372 717 B1**
(45) Date of publication and mention of the grant of the patent: **19.01.1994**
(21) Application number: 89311444.7
(22) Date of filing: 06.11.1989
(51) Int. Cl.: B23C 5/20, B23D 37/00, B23C 3/06

(54) **Internal disk milling cutter with improved cutter insert**
Scheibenförmigen Fräser mit verbessertem Schneidkörpen
Fraise disque à coupe interne avec plaquette améliorée

(30) Priority: 02.12.1988 US 279385
(43) Date of publication of application: 13.06.1990
(73) Proprietor: GENERAL MOTORS CORPORATION, Detroit Michigan 48202 (US)
(72) Inventor: Kaminski, Brian Daniel, Lake Orion, MI.48035 (US)
(74) Representative: Denton, Michael John

(56) References cited:
- EP-A- 0 134 383
- DE-A- 1 477 885
- DE-B- 2 515 937
- US-A- 2 870 523

## Description

This invention relates to internal disk milling cutters as specified in the preamble of claim 1, for example as disclosed in US-A-4,488,839, and to an improved cutter insert.

### Background of the Invention

Several alternative methods are known for machining a workpiece cylindrical surface, such as the main journal on a vehicle crank shaft, from a rough to a finished diameter. In some methods, such as plunge turning or turn broaching, the workpiece is spun about its axis, and the tool is moved into the spinning surface. A cutting plate suitable for use in plunge turning or turn broaching is disclosed in DE-A-1 477 885, and has at least two oppositely-arranged cutting edges connected to one another by an external clamping surface formed as a depressed recess having two surfaces ascending from a linear base thereof towards the two oppositely-arranged cutting edges. The cutting plate is of a rhombic shape with the two cutting edges extending parallel to one another and in line with the base of the recess. When it is not practical or desirable to spin the workpiece, it may be held stationary, and the tool spun and moved into the workpiece instead.

This is what is done in a method of milling known as internal disk milling. A ring-shaped cutter body has an internal diameter that is substantially larger than the workpiece surface to be machined. Mounted to the inner surface of the cutter body are a plurality of evenly circumferentially-spaced cutter inserts located at the same radius and in the same orientation. The workpiece is moved through the cutter body until the surface to be machined is aligned with the inserts, then held stationary. Then, the cutter is operated by spinning the cutter body with its axis of symmetry parallel to the axis of the workpiece surface, and initially plunged by moving it towards the workpiece, keeping the two axes parallel. Each insert, therefore, moves in a short cutting arc relative to the workpiece surface as it cuts. The plunging motion is stopped when the finished diameter is reached, although only as much of the workpiece surface as the cutting arc of the inserts overlaps will have been machined off. Finally, the axis of the still spinning cutter body is orbited around the axis of the workpiece until the entire surface of the workpiece is machined down to the finished diameter.

An example of a conventional cutter insert used in an internal disk milling cutter may be seen USPN 4,488,839 (Wermeister et al). The cutter insert 8 shown in the drawings of USPN 4,488,839 is a constant thickness wafer with flat sides that is mounted to the cutter body so as to present one of its straight cutting edge basically perpendicular to its cutting arc direction. The insert may be turned or indexed so as to present new edges to the workpiece, when the insert undergoes wear. In some cases, polygonal inserts are used, which have a greater number of usable straight cutting edges. The advantage of orienting a straight cutting edge perpendicular to the direction of its cutting arc is that the insert basically pivots about the line of the cutting edge as it moves through its cutting arc. Therefore, the cutting edge does not change its effective orientation relative to the cut surface, and a suitably flat-sided cylindrical machined surface results. The big disadvantage of a straight cutting edge so oriented is that it cuts a chip from the workpiece surface that is as wide as the edge is long, creating a high cutting force and edge wear of the cutter insert.

Another basic type of surface milling, known as skiving, reduces edge loading by using a diamond-shaped insert with a pair of straight cutting edges disposed in a V. The corner of the V contacts the machined surface first, followed by the side edges of the V, which ploughs the metal to each side. This creates a continuously thinner chip, with consequently less cutting force. The insert has a planar, flat external surface trailing the cutting edges, but is simply tipped back at a suitable clearance angle so that the flat trailing surface does not drag on the machined piece. However, this conventional insert design works well only when it contacts the machined surface in an orientation that basically does not change during the time that the insert contacts the workpiece, as is the case in turn broaching or pull broaching. In internal disk milling, where the insert moves through a cutting arc and continuously changes its orientation relative to the machined surface, such a conventional skiving insert, even if tipped back at a clearance angle, would dig into the machined surface and leave a V-shaped trough, rather than a straight sided, "flat" cylindrical surface. It is not immediately obvious how a skiving type cutter insert could be shaped or oriented so as to work properly on an internal milling disk cutter body, which is why the high edge loading of the straight cutting edge has been tolerated in the past.

### Summary of the Invention

An internal disk milling cutter according to the present invention is defined by the features specified in claim 1. A cutter insert is defined in claim 3.

The cutter of the invention has a conventional cutter body that is operated in the same way, and on the same type of workpiece, as that described above. Each of the cutter inserts of the invention is also mounted to the cutter body at even circumferential locations and at the same radius relative to the axis of the cutter body. However, each of the cutter inserts of the invention has a new shape and a specific orientation on the cutter body that co-operate so as to create a skiving action, whilst still leaving a suitably flat-sided cylindrical surface.

Rather than a flat external surface, the cutter insert of the invention has a general wedge shape with an upper surface that is ground or otherwise formed so as to be concave, thereby creating a pair of co-planar cutting edges that sweep back symmetrically from a forwardmost cutting corner point. The cutter insert is mounted to the cutter body in an orientation that puts the cutting corner on a central plane of the cutter body that is normal to the axis of the cutter body. The insert orientation also locates the cutting edges such that they are substantially perpendicularly bisected by a radial plane through the cutter body axis. More particularly, in the preferred embodiment disclosed, the upper surface of the insert is comprised of a pair of flat, triangular top faces that slope down at a shallow angle to the centre of the insert. The pair of cutting edges thereby created are generally V-shaped and coplanar.

When the cutter is operated as described, the cutting edges, because of their orientation, remain substantially tangential to the surface that they are cutting. The concavity of the upper surface of the insert trailing the cutting edges is sufficient to clear the cut surface, without interference or drag. Given their general V shape, the cutting edges create a skiving action which produces a continuous thin chip using less force than a conventional cutter. But, because of their orientation and the way in which they move relative to the cut surface, the cutting edges create a suitable journal surface. In addition, in the preferred embodiment, the cutter insert is given a totally symmetrical diamond shape, so as to have four wedge-shaped operative quarters, and can be indexed four times in use before being discarded through wear.

It is, therefore, a general object of the invention to provide a skiving type cutting action in an internal disk milling cutter.

It is another object of the invention to provide a new cutter insert shape that can provide a skiving type cutting action.

It is another object of the invention to provide a cutter on which the cutter inserts have an orientation that co-operates with the new insert shape to provide a skiving action whilst creating a suitably cylindrical final machined surface.

It is yet another object of the invention to provide such a cutter in which the inserts each have a concave upper surface and a pair of co-planar cutting edges that sweep symmetrically back from a forwardmost cutting corner, and in which the insert is oriented on the cutter body so that the cutting corner is on a central plane of the cutter body and so that a plane through the axis of the cutter body perpendicularly bisects the cutting edges, thereby allowing the cutting edges to remain substantially tangential to the workpiece surface as they move through their cutting arc, whilst the concave upper surface clears the workpiece.

### Description of the Preferred Embodiment

These and other objects and features of the invention will appear from the following written description, and from the accompanying drawings, in which:
Figure 1 is a side view of a workpiece and a cutter incorporating the invention,
Figures 2A, B and C illustrate the basic steps in the internal disk milling process,
Figure 3 is a perspective view of a preferred embodiment of a cutter insert of the invention alone,
Figure 4 is a top view of the cutter insert shown in Figure 3,
Figure 5 is a side view of the cutter insert shown in Figure 3,
Figure 6 is an end view of the cutter insert shown in Figure 3,
Figure 7 is a top view of the cutter insert shown in Figure 3, as mounted to the cutter body,
Figure 8 is a side view of the insert as mounted, showing its basic orientation and showing the path of the insert cutting arc,
Figure 9 is a side view of the cutter of the invention in operation during the initial plunge step of the milling process, and when the cutting edges of the insert have moved about half-way through their cutting arc,
Figure 10 is a view like Figure 9, but showing the cutting edges completing the cutting arc,
Figure 11 is a view showing the chip formation of a prior-art cutting insert,
Figure 12 is a view showing the chip formation of a cutting insert of the invention.

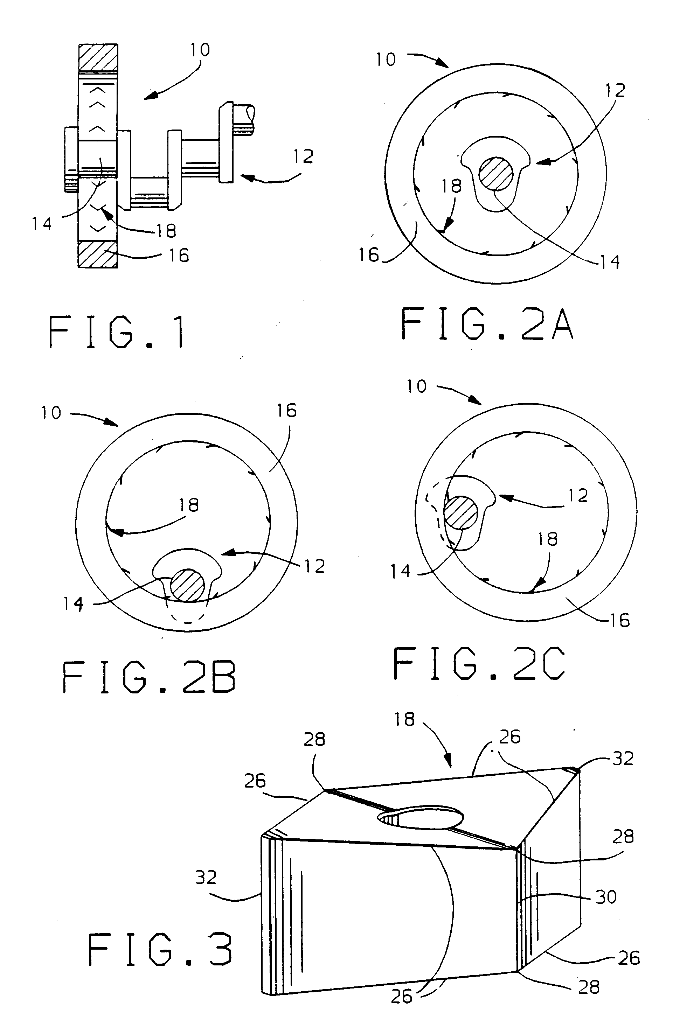

Referring first to Figures 1 and 2, an internal disk milling cutter of the invention, designated generally at 10, is used to machine a workpiece, which is a cast-iron vehicle crank shaft designated generally at 12. The cylindrical surface to be machined is a main journal 14, which is taken down from a rough diameter of approximately 72.6 mm to 68.6 mm, for a stock thickness removal of about 2.0 mm on each side. The axial length of journal 14 is approximately 23 mm. It will be understood that any cylindrical workpiece surface could be machined. Cutter 10 comprises an annular, ring-shaped cutter body 16 with an inner diameter considerably larger than journal 14. A plurality of cutter inserts, one of which is designated generally at 18, is mounted to cutter 10 at even circumferential locations, at the same radius, and in an orientation to be described later.

Referring next to Figure 2, cutter 10 is operated according to conventional internal disk milling principals. As seen in Figure 2A, crank shaft 12 is first moved through cutter body 16 and stopped when journal 14 is aligned with the inserts 18. Then, cutter body 16 is rapidly spun about its axis of symmetry by a conventional disk milling machine, not shown. As it spins, the axis of cutter body 16 is kept parallel to the axis of crank shaft 12, and is initially plunged vertically towards crank shaft 12, see Figure 2B. The plunging operation is stopped when the cutter 10 has taken as much of the journal 14 as the path of inserts 18 overlaps down to a finished diameter for the journal 14. Finally, the axis of the still spinning cutter body 16 is held at the same distance from the axis of crank shaft 12 and orbited around it once, describing a cylinder, see Figure 2C. This takes the remainder of journal 14 down to its final, finished diameter. There may be multiple plunging and orbiting operations if the stock thickness to be removed from journal 14 is large.

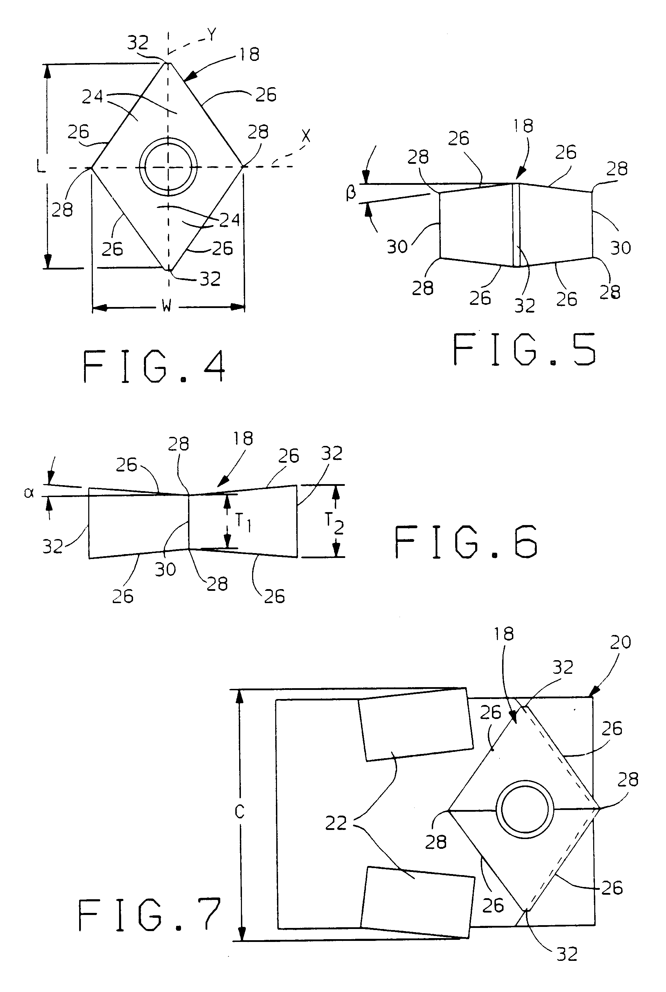

Referring next to Figure 7, the inserts 18, which are generally diamond-shaped, are mounted to cutter body 16 by a series of mounting block cartridges 20. Each cartridge 20 includes a series of three inserts mounted thereto by any suitable fastener, including a central insert 18, which cuts the majority of the centre of journal 14, and a pair of conventional straight inserts 22. Inserts 22 cut the sides of journal 14 in conventional fashion. The cutting corner to cutting corner separation C of inserts 22, which equals the axial dimension of journal 14, is approximately 23 mm. A total of twenty-four cartridges 20 are fixed to the inner surface of cutter body 14 so that all like inserts are evenly circumferentially spaced, at the same radius, and have the same predetermined orientation. The orientation of the inserts 18 may be better explained after their shape is described.

Referring next to Figures 3 through 6, insert 18 is formed of carbide or other suitable material, with a centrally located mounting hole. The specific shape of insert 18 is complex, and several views and dimensions are necessary to explain it. However, it is symmetrical about planes through both its width, X, and length, Y, shown by dotted lines in Figure 4, so only one fourth of it need be explained in detail, and only one fourth of it is operative at any given time. From the straight plan view of Figure 4, insert appears to have a regular diamond shape, with a length Y of 19.3 mm and a width W of 14.2 mm. The angles subtended in the plan view of Figure 4 comprise two obtuse angles of 110 degrees each and two acute angles of 70 degrees. The shape of insert 18 is more complex than appears in Figure 4, however. Unlike a conventional diamond-shaped insert, insert 18 is not of a constant thickness, and its upper (or lower) surface is not flat or planar, but concave. Specifically, one half of the upper surface of insert 18, its operative one quarter, is comprised of two triangular surfaces 24 of the same size that slope inwardly and down to the central plane passing through X at a shallow angle, alpha, of 5.6 degrees to a plane which is normal to both of the planes passing through the width X and the length Y of the insert. The triangular surfaces 24 create at the perimeter of insert 18 a pair of generally V-shaped, co-planar cutting edges 26 that sweep back symmetrically to the plane passing through Y from a forwardmost cutting corner point 28. As best seen in Figure 5, the cutting edges 26, though co-planar to one another, do not lie in a plane normal to the X and Y plane, but form instead a small angle, beta, of 4.6 degrees, the purpose of which is described below. Finally, insert 18 does not have a single, constant thickness. It has a constant thickness down the plane passing through X, which is shown as T1 measured at its end edges 30, of 6.35 mm, and a linearly varying thickness in the Y plane that varies from a minimum of 6.35 mm where the Y plane intersects the X plane to a maximum T2 at its side edges 32 of 8.25 mm. The description just given holds true for the other three quarters of insert 18, since it is completely symmetrical. So, there are four such wedge- or plough-shaped quarters, each comprising a pair of cutting edges 26 and a cutting corner 28.

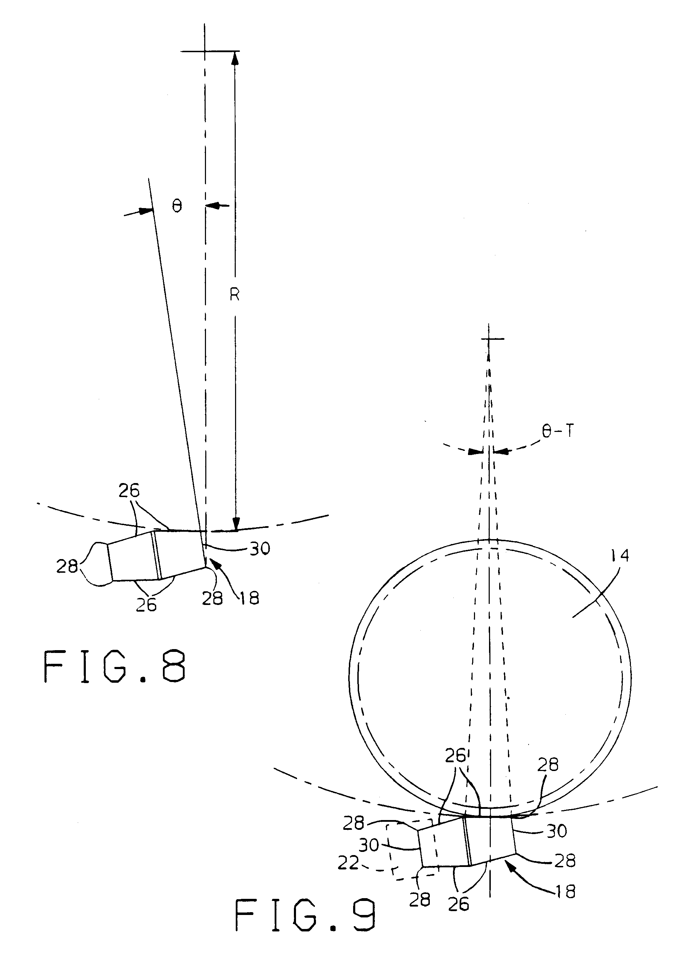

Referring next to Figure 8, the purpose for the complex shape of insert 18 may be best understood after describing its orientation on cutter body 16, as the two features of insert shape and orientation co-operate to give the improved cutting operation. The ring-shaped cutter body 16, though not specifically illustrated as such, may be thought of as having a central plane normal to its axis and bisecting it, which would be the plane of the page. It may also be thought of as having a radial plane that includes its axis, normal to the plane of the page, which is represented by the vertical dotted line. Of course, there are any number of such radial planes through the centre axis of cutter body 16. Each insert 18 is mounted to cutter body 16 so that its cutting corner 28 is at a radius R of 125.85 mm and lies in the central plane, and such that its front edge 30 creates an angle, theta, of 8 degrees with a radial plane of the cutter body 16. Each straight insert 22 follows a lead insert 18 with its cutting corner at the same radius, and tipped back at any desired clearance angle. Those skilled in the art will recognize that, given the size and shape of insert 18 as described, and given R and theta, its position and orientation on the cutter body 16 are completely determined. R, of course, is simply made as large as the limitations of cutter body size and milling machine size and cost will allow. A better understanding of the underlying design philosophy of the invention may be had if the factors that determine theta are explained, and that may be better explained after the basic operation of the cutter insert 18 has been described.

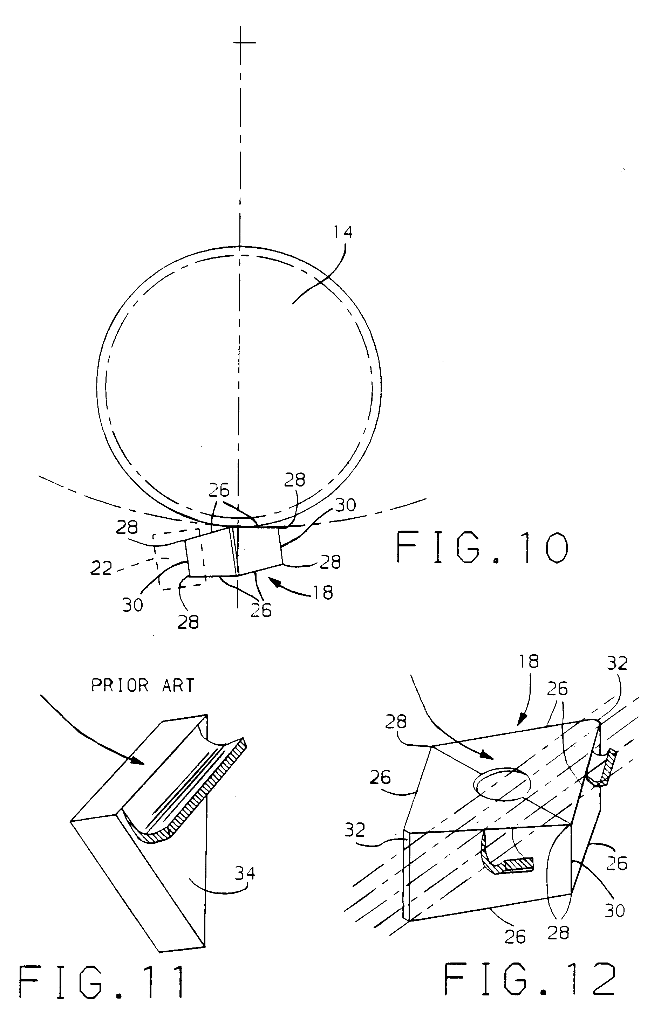

Referring next to Figure 9, the first insert 18 to contact the journal 14 is shown midway through its cutting contact, and at the very beginning of the initial plunge operation described above. The straight inserts 22 are shown in dotted lines. The finished diameter of journal 14 is also shown in dotted lines. As the cutter 16 body is spun about its axis, each insert 18 will move in a circular path of radius R, shown by the large dotted circular line. The cutting edges 26 will contact and cut the surface of journal 14 over a short arc where their path overlaps the journal surface 14, which may be called their cutting arc. The degree of that overlap depends on the distance of cutter body 16 axis from the axis of the journal 14. At any point in time during the cutting arc, only a small portion of each cutting edge 26 will actually physically contact the cut surface of journal 14, which may be referred to as the active portion of the cutting edges 26. The size of that active portion will depend on the relative size of R and the journal 14.

Referring next to Figures 11 and 12, as they move in the cutting arc, the cutting edges 26 in effect rock or pivot around the cut surface. This has been illustrated in Figure 12 by a series of dotted lines which represent equal intervals of time over the cutting arc. The forward corner 28 will engage the cut surface of journal 14 first, followed by successive action portions of the trailing cutting edges 26. This gives the skiving cutting action desired, cutting a long, thin continuous chip and ploughing the cut metal to either side. The cutting forces are low, and act symmetrically on the insert 18. The concavity of the insert 18 provided by the shallow angle of the surfaces 24 that trail the cutting edges 26 is sufficient to keep them clear of the cut surface as the edges 26 cut. One piece of that chip corresponding to an active portion of the cutting edges 26 is illustrated in Figure 12. This may be contrasted to the chip created when cut by a conventional insert 34, shown in Figure 11. The entire edge of insert 34 cuts a wide chip during the entire cutting arc, requiring a high cutting force to obtain.

Referring next to Figures 9 and 10, the factors that determine theta may be explained. As described above, unlike a conventional insert, the orientation of the cutting edges 26 relative to the journal surface 14 will continually change as they rock around the surface being cut. But, to minimize the effect of that arcuate motion, the insert 18 is oriented so that a radial plane of the cutter body 16, that is, a plane that includes the cutter body 16 axis, will substantially perpendicularly bisect the cutting edges 26. This is illustrated in Figure 9 by a long, thin isosceles triangle having sides of length R, shown in dotted lines, and having a base which is the length of the cutting edges 26 as projected into the central plane of the cutter body 16 (the plane of the page). Then, when the cutting edges 26 are midway through their cutting arc, they will be almost perfectly tangential to the cut surface of journal 14, as shown in Figure 9. At the end of the cutting arc, as shown in Figure 10, they will be farther from perfect tangency with the cut surface. The same would hold equally true for the beginning of the cutting arc. But, if so oriented, the cutting edges 26 will be optimally tangential to the cut surface of journal 14 throughout the entire cutting arc. Since the length of the cutting edges 26 as projected into the central plane of the cutter body 14 is fairly small compared to R, the cutting edges 26 stay sufficiently tangential to the cut surface of journal 14 throughout the entire cutting arc so as to create a final cylindrical machined surface that is suitably "flat", or straight-sided. This may be contrasted with a conventional diamond-shaped insert with flat surfaces, which, even if tipped back at a clearance angle, would dig into the machined surface and leave a V-shaped notch. The optimal theta would be the tip of the isosceles triangle shown, designated theta-T. The optimal theta-T may be calculated knowing R and the projected length of cutting edge 26. Geometrically, theta-T may be calculated by bisecting the triangle base with a radial plane of the cutter body 16 to give two right-angled triangles, each with an acute angle that is one half of theta-T. Without repeating the mathematics here, one doing so will find that the ideal theta-T calculates out to about 3.5 degrees. The theta actually used, 8 degrees, adds an additional four or five degrees clearance angle to assure that the surfaces 24 behind the cutting edges 26 clear the cut surface. While that is a departure from the theoretical optimum, those skilled in the milling art will recognize the addition of an "insurance" clearance angle to the ideal orientation angle as being a standard practice.

Variations of the preferred embodiment may be made. Since only one quarter of the insert 18 is operative at any one time, it could also be constructed so as to have as few as one forwardmost corner 28, one pair of cutting edges 26, and one pair of triangular surfaces 24 behind the cutting edges 26. It is most advantageous to have an indexable insert, of course, but space and packing considerations might dictate a smaller insert. And, despite the rather complex shape of insert 18, it is a shape that lends itself conveniently to creating four operative quarters. That is, the triangular surfaces 24 of each operative quarter are co-planar to those of the adjacent operative quarter, so the insert 18 may be shaped with only two larger triangular surfaces on each upper and lower surface, symmetrical to the X plane, and with the same shallow angle alpha. The same skiving action and optimal tangency throughout the cutting arc could be achieved with an insert in which the cutting edges corresponding to edges 26 were not perfectly straight and V-shaped. For example, the cutting edges might be given a slightly curved or lobate shape, like the edges of a leaf sweeping back from its tip. So long as the cutting edges extend back symmetrically from a forwardmost cutting corner, and so long as the external surface of the insert trailing the cutting edges is made sufficiently concave to clear the cutting edges, then the insert can be optimally oriented on the cutter body as disclosed to give the skiving cutting action desired.

## Claims

1. An internal disk milling cutter (10) for machining a cylindrical workpiece surface (14) from a rough to a finished diameter, said internal disk milling cutter (10) comprising a ring-shaped cutter body (16) having an axis of symmetry and a central plane perpendicular to said axis of symmetry, said ring-shaped cutter (16) being adapted to be operated by spinning it about its axis of symmetry whilst said axis of symmetry is maintained parallel to the axis of said workpiece cylindrical surface; and a plurality of cutter inserts (18) mounted on said cutter body (16) at substantially evenly spaced circumferential locations, each insert (18) being located at the same radius from, and at the same predetermined orientation to, said axis of symmetry as all the other inserts (18); characterised in that each of said cutter inserts (18) is plough-shaped in configuration, and has a concave upper surface (24) that is disposed clear of a pair of co-planar cutting edges (26) that are swept back symmetrically about said cutter body central plane from a forwardmost cutting point (28), said predetermined cutter insert orientation being such that a radial plane through said cutter body axis perpendicularly bisects a projection of said cutting edges (26) into said cutter body central plane.

2. An internal disk milling cutter (10) according to claim 1, characterised in that each of said cutter inserts (18) has said concave upper surface comprised of a pair of triangular top faces (24) of the same size, which are joined together along their bases and are sloped down at a shallow angle to a plane which is normal to both a plane passing through the width (X) of the insert (18) and a plane passing through the length (Y) of the insert (18), thereby creating said pair of co-planar straight cutting edges (26) extending back symmetrically from said forwardmost cutting point (28).

3. A rhombic-shaped cutter insert (18), having at least one depressed external surface located between two cutting edges (26) for use with an internal disk milling cutter according to claim 1 or 2, characterised in that said cutter insert (18) is a diamond-shaped cutter insert which includes two concave external surfaces (24)symmetrically disposed about the centre of said insert (18), each of said external surfaces being comprised of a pair of triangular faces (24) of the same size, which are joined together along their bases and are sloped down at a shallow angle from a plane which is normal to both a plane passing through the width (X) of the insert (18) and a plane passing through the length (Y) of the insert (18), thereby creating a pair of co-planar straight cutting edges (26) extending back symmetrically from a forwardmost cutting corner (28).

## Patentansprüche

1. Scheiben-Innenfräser (10) zum Bearbeiten einer zylindrischen Werkstückfläche (14) von einem groben auf einen bearbeiteten Durchmesser, wobei der Scheiben-Innenfräser (10) einen ringförmigen Fräserkörper (18) umfaßt mit einer Symmetrieachse und einer zu der Symmetrieachse senkrechten Zentralebene, welcher ringförmige Fräserkörper (16) ausgelegt ist, durch Rotieren um seine Symmetrieachse betrieben zu werden, während die Symmetrieachse parallel zur Achse der zylindrischen Werkstückfläche gehalten wird; und eine Vielzahl von Schneideinsätzen (18), die an dem Schneidkörper (16) an im wesentlichen gleichmäßige beabstandeten Umfangsstellen angebracht sind, wobei jeder Einsatz (18) mit dem gleichen Radius von und mit der gleichen vorbestimmten Ausrichtung zu der Symmetrieachse angeordnet ist, wie alle anderen Einsätze (18); dadurch gekennzeichnet, daß jeder Schneideinsatz (18) pflugförmig gestaltet ist und eine konkave obere Fläche (24) besitzt, die abgehoben von einem Paar koplanarern Schneidkanten (26) angeordnet ist, welche symmetrisch um die Zentralebene des Fräserkörpers von einer vordersten Schneidspitze zurückgeschwenkt (28) sind, wobei die vorbestimmte Schneideinsatzausrichtung so ist, daß eine radiale Ebene durch die Achse des Schneidkörpers eine Projektion der Schneidkanten (26) auf die Fräserkörper-Zentralebene des Schneidkörpers senkrecht in zwei gleiche Teile teilt.

2. Scheiben-Innenfräser (10) nach Anspruch 1, dadurch gekennzeichnet, daß jeder Schneideinsatz (10) die konkave obere Fläche besitzt, die aus zwei dreieckförmigen oberen Flächen (24) der gleichen Größe zusammengesetzt ist, die längs ihrer Grundlinien aneinander angeschlossen und mit einem flachen Winkel zu einer Ebene nach unten geneigt sind, die sowohl auf einer durch die Breite (X) Einsatzes (18) gehenden Ebene als auch auf einer durch die Länge (Y) des Einsatzes (18) hindurchtretende Ebene senkrecht ist, wodurch das Paar von koplanaren geradlinigen Schneidkanten (26) geschaffen wird, die sich von der vordersten Schneidstelle (28) symmetrisch nach hinten erstrecken.

3. Rhombenförmiger Schneideinsatz (18) mit mindestens einer vertieften Außenfläche, die zwischen den beiden Schneidkanten (26) liegt, zur Verwendung mit einem Scheiben-Innenfräser nach Anspruch 1 oder 2, dadurch gekennzeichnet, daß der Schneideinsatz ein rautenförmiger Schneideinsatz ist, der zwei konkave Außenflächen (24) enthält, die symmetrisch um die Mitte des Einsatzes (18) angeordnet sind, wobei jede Außenfläche zusammengesetzt ist aus einem Paar gleichgroßer Dreieckflächen (44), die längs ihrer Grundlinien aneinander angesetzt sind und die mit einem flachen Winkel gegen eine Ebene nach unten verlaufen, die senkrecht sowohl zu einer durch die Breite (X) des Einsatzes (18) wie auch zu einer durch die Länge (Y) des Einsatzes (18) hindurchtretenden Ebene senkrecht steht, wodurch ein Paar von koplanaren geraden Schneidkanten (26) geschaffen wird, die sich symmetrisch von einem vordersten Schneidwinkel (28) nach hinten erstrecken.

## Revendications

1. Fraise à disque interne (10) pour usiner une surface (14) d'une pièce cylindrique à partir d'un diamètre d'ébauche pour obtenir un diamètre de finition, la fraise à disque interne (10) comprenant un corps (16) de fraise en forme d'anneau comportant un axe de symétrie et un plan central perpendiculaire à cet axe de symétrie, la fraise en forme d'anneau (16) étant adaptée pour être actionnée en la faisant tourner autour de son axe de symétrie alors que cet axe de symétrie est maintenu parallèle à l'axe de la surface cylindrique de la pièce ; et une pluralité d'inserts (18) de fraise montés sur le corps (16) de fraise à des emplacements sensiblement espacés circonférentiellement de façon uniforme, chaque insert (18) étant placé à un même rayon à partir de l'axe de symétrie et avec une même orientation prédéterminée par rapport à cet axe de symétrie que tous les autres inserts (18) ; caractérisée en ce que chacun de ces inserts (18) de fraise a une configuration en forme de soc, et a une surface supérieure concave (24) qui est disposée à l'écart d'une paire de bords (26) coupants coplanaires et qui sont disposés en flèche symétriquement par rapport au plan central du corps de fraise depuis un point (28) coupant le plus avancé, l'orientation d'insert de fraise prédéterminée étant telle qu'un plan radial passant par l'axe de corps de fraise bissecte perpendiculairement une saillie des bords (26) coupant dans le plan central du corps de fraise.

2. Fraise à disque interne (10) selon la revendication 1, caractérisée en ce que chacun des inserts (18) de fraise a la surface supérieure concave qui comprend une paire de faces triangulaires de dessus (24) d'une même tailles, lesquelles sont reliées ensemble le long de leur base et sont inclinées vers le bas, suivant un angle faible, vers un plan qui est perpendiculaire à la fois à un plan passant à travers la largeur (X) de l'insert (18) et à un plan passant à travers la longueur (Y) de l'insert (18), de manière à obtenir que la paire de bords (26) coupants rectilignes coplanaires s'étendent vers l'arrière symétriquement à partir du point coupant (28) le plus avancé.

3. Insert (18) de fraise en forme de rhomboèdre, comportant au moins une surface externe abaissée placée entre deux bords (26) coupants destiné à être utilisé avec une fraise à disque interne selon la revendication 1 ou 2, caractérisé en ce que l'insert (18) de fraise est un insert de fraise en forme de losange comprenant deux surfaces externes concaves (27) disposées symétriquement par rapport au centre de l'insert (18), chacune de ces surfaces externes comprenant une paire de faces triangulaires (24) de la même taille, lesquelles sont reliées ensemble le long de leur base et sont inclinées vers le bas, suivant un angle faible, depuis un plan qui est perpendiculaire à la fois à un plan passant à travers la largeur (X) de l'insert (18) et à un plan passant à travers la longueur (Y) de l'insert (18), de manière à obtenir que la paire de bords (26) de fraise rectilignes coplanaires s'étendent vers l'arrière symétriquement à partir du point coupant (28) le plus avancé.
